# EUROPÄISCHE PATENTSCHRIFT

(11) **EP 3 268 608 B1**
(45) Veröffentlichungstag und Bekanntmachung des Hinweises auf die Patenterteilung: **19.08.2020**
(21) Anmeldenummer: 16710940.4
(22) Anmeldetag: 08.03.2016
(51) Int. Cl.: F04B 27/24, F04B 39/12, F04B 49/06

(54) **KÄLTEMITTELVERDICHTERANLAGE**
REFRIGERANT COMPRESSOR SYSTEM
INSTALLATION DE COMPRESSION D'UN RÉFRIGÉRANT

(30) Priorität: 13.03.2015 DE 102015103730
(43) Veröffentlichungstag der Anmeldung: 17.01.2018
(73) Patentinhaber: BITZER Kühlmaschinenbau GmbH, 71065 Sindelfingen (DE)
(72) Erfinder: SCHULAKS, Andreas, 72108 Rottenburg (DE)
(74) Vertreter: Hoeger, Stellrecht & Partner Patentanwälte mbB
(86) Internationale Anmeldenummer: PCT/EP2016/054907
(87) Internationale Veröffentlichungsnummer: WO 2016/146436

(56) Entgegenhaltungen:
- DE-A1- 2 810 059
- DE-A1-102008 004 569
- DE-T2-602004 000 156
- DE-T2-602004 002 317
- US-A- 5 550 736

## Beschreibung

Die Erfindung betrifft eine Kältemittelverdichteranlage, insbesondere für Ammoniak als Kältemittel, umfassend eine erste, expandiertes Kältemittel führende Kältemittelleitung, eine zweite, verdichtetes Kältemittel führende Kältemittelleitung, mindestens einen zwischen der ersten und der zweiten Kältemittelleitung angeordneten Kältemittelverdichter, der durch einen Motor angetrieben ist, und eine Steuereinheit zum Betreiben der Kältemittelverdichteranlage.

Eine Gasverdichteranlage mit den vorstehend beschriebenen Merkmalen ist aus der DE 60 2004 000 156 T2 bekannt.

Auch Kältemittelverdichteranlagen sind aus dem Stand der Technik bekannt.

Bei Kältemittelverdichteranlagen besteht das Problem, dass diese üblicherweise in einer Umgebung eingesetzt werden, in welcher ein Ausfall der Kältemittelverdichteranlage erhebliche finanzielle Schäden nach sich ziehen kann.

Beispielsweise sind derartige Kältemittelverdichteranlagen in großen Kühlanlagen eingesetzt und ein Ausfall einer Kältemittelverdichteranlage kann zu erheblichen Schäden bei dem in den Kühlanlagen zu kühlenden Kühlgut führen.

Der Erfindung liegt daher die Aufgabe zugrunde, die Betriebssicherheit einer derartigen Kältemittelverdichteranlage zu verbessern.

Diese Aufgabe wird erfindungsgemäß durch eine Kältemittelverdichteranlage mit den Merkmalen des Anspruchs 1 gelöst.

So ist die Verbesserung der Betriebssicherheit erfindungsgemäß dadurch möglich, wenn dem mit der mindestens einen Zentralprozessoreinheit kommunizierenden Bussystem mehrere Eingabe-/Ausgabeeinheiten zugeordnet sind und somit mit der jeweils die Kältemittelverdichteranlage steuernden Zentralprozessoreinheiten kommunizieren.

Weiterhin lässt sich die Betriebssicherheit der Kältemittelverdichteranlage erfindungsgemäß dadurch verbessern, dass der Kältemittelverdichteranlage zugeordnete Sensoren mehreren dem Bussystem zugeordneten Eingabe-/Ausgabeeinheiten zugeordnet sind.

Damit ist die Kältemittelverdichteranlage über die mit den Eingabe-/Ausgabeeinheiten gekoppelten Sensoren in der Lage, Sensorwerte zuverlässig zu erfassen, wobei vorzugsweise vorgesehen ist, dass die mehreren Sensoren mehreren verschiedenen Eingabe-/Ausgabeeinheiten zugeordnet werden, um auch im Fall von Ausfällen der Eingabe-/Ausgabeeinheiten möglichst wenige Informationen zu verlieren.

Alternativ oder ergänzend sieht eine vorteilhafte Lösung vor, dass Sensoren gleichzeitig mit mehreren Eingabe-/Ausgabeeinheiten verbunden werden, um damit in der Lage zu sein, beispielsweise beim Ausfall einer der Eingabe-/Ausgabeeinheiten mit der anderen Eingabe-/Ausgabeeinheiten die Sensorwerte trotzdem zu erfassen.

Ferner sieht die erfindungsgemäße Lösung vor, dass den für den Betrieb primär vorgesehenen Sensoren redundante Sensoren zugeordnet sind und dass die redundanten Sensoren mit anderen Eingabe-/Ausgabeeinheiten der Steuereinheit verbunden sind als die für den Betrieb primär vorgesehenen Sensoren.

Eine weitere vorteilhafte Lösung sieht beispielsweise vor, dass einige der Sensoren, beispielsweise die redundanten Sensoren, auf die unmittelbar mit den Zentralprozessoreinheiten kommunizierenden Eingabe-/Ausgabeeinheiten aufgeschaltet sind, um dadurch auch bei Ausfall des Bussystems die Möglichkeit zu haben, mit den beispielsweise redundanten Sensoren die Kältemittelverdichteranlage weiter zu betreiben.

Ferner ist vorzugsweise vorgesehen, dass einige der Sensoren gleichzeitig mit mehreren Eingabe-/Ausgabeeinheiten verbunden sind.

Dies ist insbesondere dann vorteilhaft, wenn die beispielsweise redundanten Sensoren mit den unmittelbar mit dem Zentralprozessoreinheiten kommunizierenden Eingabe-/Ausgabeeinheiten verbunden sind, da in diesem Fall der Wechsel von einer Zentralprozessoreinheit zur anderen Zentralprozessoreinheit möglich ist und nach wie vor die Sensoren über die unmittelbar mit der jeweiligen Prozessoreinheit kommunizierenden Eingabe-/Ausgabeeinheit abgefragt werden können.

Eine vorteilhafte Lösung sieht vor, dass die Steuereinheit eine erste Zentralprozessoreinheit sowie mindestens eine mit der ersten Zentralprozessoreinheit kommunizierende Eingabe-/Ausgabeeinheit für Steuergrößen aufweist und dass der ersten Zentralprozessoreinheit eine zweite Zentralprozessoreinheit zugeordnet ist, welche bei Ausfall der ersten Zentralprozessoreinheit die Steuerungsfunktionen der Kältemittelverdichteranlage von der ersten Zentralprozessoreinheit zur Steuerung übernimmt.

Der Vorteil der erfindungsgemäßen Lösung ist darin zu sehen, dass dadurch die Ausfallsicherheit einer derartigen Kältemittelverdichteranlage erheblich verbessert werden kann, da ein Fehler in der ersten Zentralprozessoreinheit nicht zum Totalausfall der Kältemittelverdichteranlage führt. Dadurch, dass die zweite Zentralprozessoreinheit die Steuerung übernimmt und die Kältemittelverdichteranlage weiterbetreibt, kann vielmehr die Fehlerbehebung in der ersten Zentralprozessoreinheit problemlos und ohne Zeitdruck durchgeführt werden.

Hinsichtlich der Kommunikation der mindestens einen Eingabe-/Ausgabeeinheit sieht eine vorteilhafte Lösung vor, dass die erste Zentralprozessoreinheit mit mindestens einer Eingabe-/Ausgabeeinheit über ein Bussystem kommuniziert.

Ferner ist alternativ oder ergänzend die erste Zentralprozessoreinheit auch noch so ausgebildet, dass sie unmittelbar mit mindestens einer Eingabe-/Ausgabeeinheit kommuniziert.

Auch bei der zweiten Zentralprozessoreinheit ist es von Vorteil, wenn diese mit mindestens einer Eingabe-/Ausgabeeinheit über ein Bussystem kommuniziert. Ferner ist es alternativ oder ergänzend von Vorteil, wenn die zweite Zentralprozessoreinheit unmittelbar mit mindestens einer Eingabe-/Ausgabeeinheit kommuniziert.

Ferner ist es hinsichtlich der Kommunikation der zweiten Zentralprozessoreinheit mit der ersten Zentralprozessoreinheit von Vorteil, wenn die zweite Zentralprozessoreinheit mit der ersten Zentralprozessoreinheit über ein Bussystem kommuniziert.

Um die Kommunikation, insbesondere bei einer Übernahme der Steuerungsfunktionen durch die zweite Zentralprozessoreinheit, in vorteilhafter Weise zu vereinfachen, ist vorzugsweise vorgesehen, dass die zweite Zentralprozessoreinheit mit der ersten Zentralprozessoreinheit über dasselbe Bussystem kommuniziert wie mindestens ein Teil der Eingabe-/Ausgabeeinheiten.

Noch vorteilhafter ist es, wenn die zweite Zentralprozessoreinheit mit den Eingabe-/Ausgabeeinheiten über dasselbe Bussystem kommuniziert, wie die erste Zentralprozessoreinheit.

Um Probleme mit der Kommunikation über das Bussystem zu vermeiden ist vorzugsweise vorgesehen, dass die zweite Zentralprozessoreinheit während des Betriebs der Kältemittelverdichteranlage mittels der ersten Zentralprozessoreinheit mit den Eingabe-/Ausgabeeinheiten nicht aktiv kommuniziert.

Ferner ist es andererseits von Vorteil, wenn die erste Zentralprozessoreinheit während des Betriebs der Kältemittelverdichteranlage mittels der zweiten Zentralprozessoreinheit mit den Eingabe-/Ausgabeeinheiten nicht aktiv kommuniziert.

Hinsichtlich des Aufbaus der Zentralprozessoreinheiten wurden bislang keine näheren Angaben gemacht.

So sieht eine vorteilhafte Lösung vor, dass die erste Zentralprozessoreinheit einen ersten Prozessor und einen ersten Speicher aufweist und dass die zweite Zentralprozessoreinheit einen zweiten Prozessor und einen zweiten Speicher aufweist.

Ferner ist vorzugsweise vorgesehen, dass in dem zweiten Speicher dieselben Betriebsdaten abgelegt werden wie in dem dem ersten Prozessor zugeordneten ersten Speicher.

Insbesondere ist vorgesehen, dass die erste Zentralprozessoreinheit die in dem ersten Speicher abzulegenden Betriebsdaten ständig zeitnah mit dem Ablegen im ersten Speicher in Form eines Datenstroms der zweiten Zentralprozessoreinheit übermittelt, um somit zeitnah die Daten in dem zweiten Speicher der zweiten Zentralprozessoreinheit zur Verfügung zu haben und somit jederzeit eine Übernahme des Betriebs der Kältemittelverdichteranlage durch die zweite Zentralprozessoreinheit realisieren zu können.

Insbesondere ist vorgesehen, dass die erste Zentralprozessoreinheit den Datenstrom innerhalb eines vorgegebenen Toleranzzeitintervalls, insbesondere beginnend mit dem Ablegen im ersten Speicher, übermittelt, wobei das Toleranzzeitintervall festlegt, wie rasch die im ersten Speicher abgelegten Daten auch im zweiten Speicher zur Verfügung stehen, so dass danach eine Übernahme des Betriebs durch die zweite Zentralprozessoreinheit möglich ist.

Um ständig erkennen zu können, ob die erste Zentralprozessoreinheit zuverlässig funktioniert, ist vorgesehen, dass die zweite Zentralprozessoreinheit die Funktionsfähigkeit der ersten Zentralprozessoreinheit ständig überwacht und insbesondere bei nicht mehr bestehender Funktionsfähigkeit die Steuerung der Kältemittelverdichteranlage selbsttätig übernimmt.

Eine derartige ständige Überwachung der ersten Zentralprozessoreinheit kann dabei auf unterschiedlichste Art und Weise erfolgen.

So sieht eine erste vorteilhafte Lösung vor, dass die zweite Zentralprozessoreinheit durch Überwachung eines von der ersten Zentralprozessoreinheit übertragenen Datenstroms die Betriebsfähigkeit der ersten Zentralprozessoreinheit überwacht.

Das heißt, dass die zweite Zentralprozessoreinheit ständig den Datenstrom überwacht, der von der ersten Zentralprozessoreinheit kommt und anhand des Datenstroms die Funktionsfähigkeit der ersten Zentralprozessoreinheit analysiert.

Beispielsweise wäre es denkbar, anhand der Datenstruktur des Datenstroms die Funktionsfähigkeit der ersten Zentralprozessoreinheit zu analysieren.

Eine besonders einfache Möglichkeit sieht jedoch vor, dass die zweite Zentralprozessoreinheit die Zeitintervalle zwischen von der ersten Zentralprozessoreinheit der zweiten Zentralprozessoreinheit übertragenen Datenpaketen überwacht.

Diese Datenpakete können einerseits Datenpakete des Datenstroms zur Aktualisierung des zweiten Speichers sein.

Es wäre aber auch denkbar, lediglich als Datenpakete Meldesignale oder andere Daten vorzusehen, die von der ersten Zentralprozessoreinheit der zweiten Zentralprozessoreinheit übermittelt werden, um die ständige Funktionsfähigkeit der ersten Zentralprozessoreinheit der zweiten Zentralprozessoreinheit zu melden.

Beispielsweise sieht die einfachste Möglichkeit unter Verwendung der Datenpakete vor, dass die zweite Zentralprozessoreinheit bei Ausbleiben eines auf ein Datenpaket nachfolgendes Datenpaket für mehr als eine Sekunde von der nicht mehr bestehenden Funktionsfähigkeit der ersten Zentralprozessoreinheit ausgeht und die Steuerung der Kältemittelverdichteranlage selbsttätig übernimmt.

Hinsichtlich der Vorgehensweise bei der Übernahme der Steuerungsfunktionen von der ersten Zentralprozessoreinheit auf die zweite Zentralprozessoreinheit wurden bislang keine näheren Angaben gemacht.

So sieht eine vorteilhafte Lösung vor, dass die zweite Zentralprozessoreinheit bei Übernahme der Steuerungsfunktion der ersten Zentralprozessoreinheit die erste Zentralprozessoreinheit deaktiviert.

Um in diesem Fall sicher zu sein, dass keine Adressenkollisionen beim Betrieb der Kältemittelverdichteranlage durch die zweite Zentralprozessoreinheit auftreten, ist vorzugsweise vorgesehen, dass die zweite Zentralprozessoreinheit nach der Übernahme der Steuerungsfunktionen von der ersten Kältemittelverdichteranlage die erste Zentralprozessoreinheit solange deaktiviert hält, bis ein Zurücksetzen der Steuereinheit der Kältemittelverdichteranlage durch einen Servicezugriff auf die erste Zentralprozessoreinheit und die zweite Zentralprozessoreinheit erfolgt.

Im Zusammenhang mit der bisherigen Erläuterung der erfindungsgemäßen Lösung wurde lediglich auf die sich durch die erste Zentralprozessoreinheit und die zweite Zentralprozessoreinheit ergebenden Lösungen abgestellt.

Um auch die einzelnen Komponenten der Kältemittelverdichteranlage ansteuern zu können, ist vorzugsweise vorgesehen, dass die Eingabe-/Ausgabeeinheiten mit Aktor- oder Anzeigeeinheiten verbunden sind. Unter Aktoren sind alle Komponenten der Kältemittelverdichteranlage zu verstehen, die als Antriebe oder Stellelemente dienen.

Beispielsweise könnten die Eingabe-/Ausgabeeinheiten mit Motorsteuerungen und/oder mit einem Umrichter für den Motor des jeweiligen Kältemittelverdichters als Aktoren verbunden sein.

Eine weitere vorteilhafte Ausführung der erfindungsgemäßen Kältemittelverdichteranlage sieht vor, dass zwischen der ersten Kältemittelleitung und der zweiten Kältemittelleitung mindestens zwei parallel angeordnete Kältemittelverdichter vorgesehen sind.

Zwei derartige Kältemittelverdichter schaffen die Möglichkeit, ebenfalls die Betriebssicherheit der Kältemittelverdichteranlage zu verbessern, denn bei Ausfall eines der Kältemittelverdichters ist immerhin noch der zweite Kältemittelverdichter verfügbar und funktionsfähig.

Noch vorteilhafter ist es, wenn die Steuereinheit die Kältemittelverdichter überwacht und bei Ausfall eines der Kältemittelverdichter einen momentan nicht aktiven der Kältemittelverdichter aktiviert.

Diese Lösung ist deshalb besonders vorteilhaft, da in der Mehrzahl der Betriebszustände, abgesehen von extremen Betriebszuständen, nicht alle Kältemittelverdichter der Kältemittelverdichteranlage arbeiten und somit stets mindestens einer der Kältemittelverdichter nicht aktiv ist.

Bei Ausfall eines der Kältemittelverdichter kann daher mittels der Steuereinheit ein momentan nicht aktiver Kältemittelverdichter aktiviert werden.

Insbesondere ist bei einer derartigen Kältemittelverdichteranlage mit mehreren parallel angeordneten Kältemittelverdichtern vorgesehen, dass nicht mehr als vier Kältemittelverdichter in einem Kältemittelverdichtermodul eingesetzt werden, um die Kosten für die Zusammenschaltung der mehreren Kältemittelverdichter zu reduzieren. Es ist aber vorgesehen in einer erfindungsgemäßen Kältemittelverdichteranlage mehrere Kältemittelverdichtermodule einzusetzen.

In diesem Fall ist somit selbst bei Ausfall eines Kältemittelverdichters noch drei Viertel der Maximalleistung des Kältemittelverdichtermoduls oder der Kältemittelverdichteranlage verfügbar.

Als besonders zweckmäßig hat es sich erwiesen, wenn in dem Kältemittelverdichtermodul oder der Kältemittelverdichteranlage nicht mehr als drei Kältemittelverdichter arbeiten, so dass selbst bei Ausfall eines der Kältemittelverdichter immer noch zwei Drittel der Maximalleistung zur Verfügung stehen.

Weitere Merkmale und Vorteile der Erfindung sind Gegenstand der nachfolgenden Beschreibung sowie der zeichnerischen Darstellung eines Ausführungsbeispiels einer erfindungsgemäßen Kältemittelverdichteranlage.

In der Zeichnung zeigen:
- Fig.1: ein Übersichtschema einer erfindungsgemäßen Kältemittelverdichteranlage;
- Fig. 2: einen schematischen Aufbau einer Steuereinheit der erfindungsgemäßen Kälteanlage und
- Fig. 3: eine exemplarische Darstellung einer Bedienoberfläche einer Steuereinheit der Kältemittelverdichteranlage.

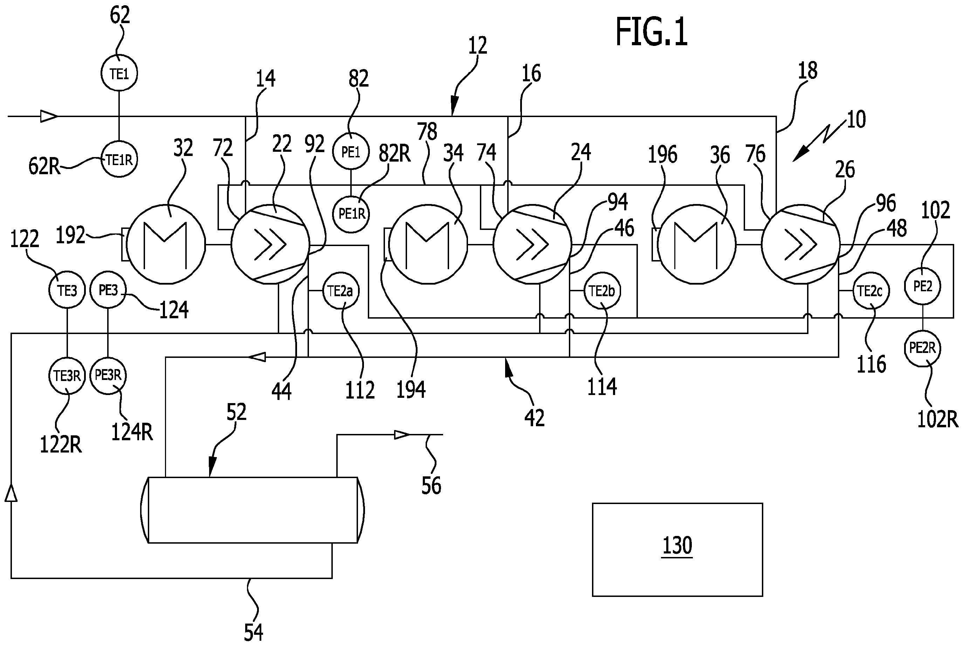

Eine in Fig. 1 schematisch dargestellte in einem Kältemittelkreislauf angeordnete Kältemittelverdichteranlage, als Ganzes mit 10 bezeichnet, umfasst eine erste Kältemittelleitung 12, die expandiertes Kältemittel führt, das beispielsweise von einer Expansionseinrichtung mit einem dieser zugeordneten Wärmetauscher, die beide in Fig. 1 nicht dargestellt sind, zugeführt wird.

Die erste Kältemittelleitung 12 umfasst bei der dargestellten Kältemittelverdichteranlage 10 drei Zuleitungen 14, 16, 18, von denen jede zu einem Kältemittelverdichter 22, 24, 26 führt, der jeweils durch einen eigenen Motor 32, 34, 36, vorzugsweise einen Elektromotor, angetrieben ist und das durch die Kältemittelleitung 12 zugeführte Kältemittel verdichtet, und zwar auf einen höheren Druck als in der ersten Kältemittelleitung 12, wobei dieser höhere Druck in der Regel ein Mitteldruck oder ein Hochdruck sein wird.

Das verdichtete Kältemittel wird aus dem jeweiligen Kältemittelverdichter 22, 24, 26 durch eine zweite Kältemittelleitung 42 abgeführt, welche zu jedem der Kältemittelverdichter 22, 24, 26 geführte Zweigleitungen 44, 46, 48 umfasst.

Die zweite Kältemittelleitung 42 führt das verdichtete Kältemittel zu einem als Ganzes mit 52 bezeichneten Schmiermittelabscheider, mit welchem eine Abscheidung des von dem verdichteten Kältemittel aus den Kältemittelverdichtern 22, 24, 26 mitgeführten Schmiermittels erfolgt, das sich in dem Schmiermittelabscheider 52, beispielsweise bodenseitig, sammelt und über eine Schmiermittelzufuhrleitung 54, ausgehend von dem Schmiermittelabscheider 52 wieder den einzelnen Kältemittelverdichtern 22, 24, 26 zur Schmierung zugeführt wird.

Die zweite Kältemittelleitung 42 führt ferner das durch den Schmiermittelabscheider 52 hindurchgeführte Kältemittel zu einem weiteren Element des Kältemittelkreislaufs, beispielsweise in Form einer Wärmeübertragerzuleitung 56, zu einem druckseitigen Wärmeübertrager zur Kühlung des durch die Verdichtung in den Kältemittelverdichtern 22, 24, 26 erhitzten Kältemittels.

Zur Überwachung der Kältemittelverdichteranlage 10 sind dieser eine Vielzahl von Sensoren zugeordnet.

Beispielsweise erfolgt eine Erfassung einer Temperatur des in die erste Kältemittelleitung 12 eintretenden expandierten Kältemittels mittels eines ersten Temperatursensors 62, der die Temperatur des gesamten, in der ersten Kältemittelleitung 12 geführten Stroms von expandiertem Kältemittel erfasst.

Gleichzeitig ist dem Temperatursensor 62 aus nachfolgend im Einzelnen genannten Gründen ein redundanter Temperatursensor 62R zugeordnet.

Mit den Zweigleitungen 14 der ersten Kältemittelleitung 12 verbundene Ansaugseiten 72, 74, 76 der Kältemittelverdichter 22, 24, 26 werden ebenfalls hinsichtlich ihres Ansaugdrucks überwacht.

Diesbezüglich könnte jeder Ansaugseite 72, 74, 76 ein Saugdrucksensor zugeordnet werden.

Im dargestellten Ausführungsbeispiel sind alle Ansaugseiten 72, 74, 76 mit einer Druckerfassungsleitung 78 verbunden, in welcher ein Saugdrucksensor 82 angeordnet ist, dem ebenfalls ein redundanter Saugdrucksensor 82R in der Druckerfassungsleitung 78 zugeordnet ist.

Bei den in der erfindungsgemäßen Kältemittelverdichteranlage 10 vorgesehenen Kältemittelverdichtern 22, 24, 26, sind deren mit den Zweigleitungen 44, 46, 48 der zweiten Kältemittelleitung 42 verbundene Druckseiten 92, 94, 96 ebenfalls hinsichtlich des Drucks des verdichteten Kältemittels überwacht.

Auch hierzu könnte jeder der Druckseiten 92, 94, 96 ein eigener Verdichtungsdrucksensor zugeordnet werden.

Bei der dargestellten und konstruktiv möglichst einfachen Lösung ist ebenfalls eine die Druckseiten 92, 94, 96 verbindende Druckerfassungsleitung 98 vorgesehen, in welcher ein Enddrucksensor 102 und ein mit diesem redundanter Enddrucksensor 102 R angeordnet sind.

Ferner ist noch jeder der Zweigleitungen 44, 46, 48 ein zweiter Temperatursensor 112, 114, 116 zugeordnet, welcher die Temperatur des durch die jeweiligen Kältemittelverdichter 22, 24, 26 verdichteten Kältemittels in den Zweigleitungen 44, 46, 48 der zweite Kältemittelleitung 42 erfasst.

Diesen zweiten Temperatursensoren 112, 114, 116 sind keine redundanten zweiten Temperatursensoren zugeordnet, da jedem der Kältemittelverdichter 22, 24, 46 durch das Vorsehen in der jeweiligen Zweigleitung 44, 46, 48 ein eigener zweiter Temperatursensor 112, 114 116 zugeordnet ist und somit die fehlerhafte Anzeige oder der Ausfall eines dieser Temperatursensoren 112, 114, 116 durch die Temperaturmessungen der jeweils anderen zweiten Temperatursensoren 112, 114, 116, erkannt werden können und im Übrigen auch durch Gegenprüfung des vom Enddrucksensor 102 gemessenen Drucks in der Druckerfassungsleitung überprüft werden kann.

Zur Erfassung von Temperatur und Druck des von dem Schmiermittelabscheider 52 über die Schmiermittelzufuhrleitung 54 zu den einzelnen Kältemittelverdichtern 22, 24, 26 zurückgeführten Schmiermittels ist der Schmiermittelzufuhrleitung 54 ein Schmiermitteltemperatursensor 122 zugeordnet, dem seinerseits ein redundanter Schmiermitteltemperatursensor 122 R zugeordnet ist.

Ferner sind der Schmiermittelzufuhrleitung 54 ein Schmiermitteldrucksensor 124 und ein redundanter Schmiermitteldrucksensor 124 R zugeordnet, so dass Druck und Temperatur in der Schmiermittelzufuhrleitung 54 ebenfalls ständig erfasst werden können.

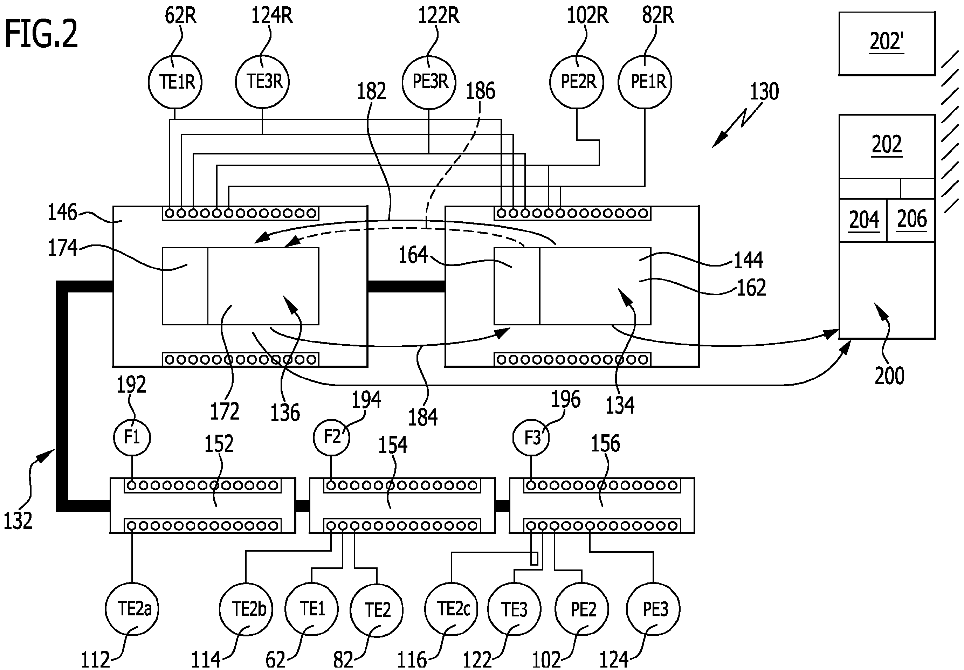

Die Steuerung der einzelnen Betriebszustände der Kältemittelverdichteranlage 10 erfolgt durch eine als Ganzes mit 130 bezeichnete Steuereinheit, die in Fig. 2 im Detail dargestellt ist, beispielsweise auf der Grundlage von Sensorwerten von einem oder mehreren der vorstehend erläuterten Sensoren oder auf der Grundlage von externen Führungsgrößen, die beispielsweise aus Sensorwerten, gemessen bei weiteren Elementen des Kältemittelkreislaufs, ermittelt werden.

Die erfindungsgemäße Steuereinheit 130, dargestellt in Fig. 2, umfasst ein Bussystem 132, über welches eine erste Zentralprozessoreinheit 134 und eine zweite Zentralprozessoreinheit 136 verbunden sind.

Beispielsweise, aber nicht notwendigerweise, ist jede der Zentralprozessoreinheiten 134 und 136 unmittelbar mit einer Eingabe-/Ausgabeeinheit 144 bzw. 146 verbunden und zusätzlich sind die Zentralprozessoreinheiten 134 und 136 über das Bussystem 132 mit weiteren Eingabe-/Ausgabeeinheiten 152, 154, 156 verbunden.

Die Ein-/Ausgabeeinheiten 144 und 146 sowie 152, 154 und 156 dienen dazu, Verbindungen mit den einzelnen Sensoren der Kältemittelverdichteranlage 10 herzustellen oder auch Steuersignale für den Betrieb der Kältemittelverdichteranlage, beispielsweise für die Motoren 32, 34, 36, auszugeben.

Beispielsweise ist bei der erfindungsgemäßen Steuereinheit 130 vorgesehen, dass der erste Temperatursensor 62 und der Saugdrucksensor 82 mit der Ein-/Ausgabeeinheit 154 gekoppelt sind.

Ferner ist beispielsweise der Enddrucksensor 102 mit der Ein-/Ausgabeeinheit 156 verbunden.

Ferner sind beispielsweise die zweiten Temperatursensoren 112, 114 und 116 jeweils mit einer der Eingabe-/Ausgabeeinheiten 152, 154 und 156 verbunden, so dass selbst bei diesen zweiten Temperatursensoren 112, 114 und 116 auch bei

Ausfall einer der Eingabe-/Ausgabeeinheiten 152, 154 und 156 noch eine Weiterführung des Betriebs möglich ist, da die anderen Eingabe-/Ausgabeeinheiten 156, 154 oder 152 noch funktionsfähig sind.

Das heißt, dass durch die Aufteilung der Verbindung der mehreren zweiten Temperatursensoren 112, 114 und 116 auf jeweils verschiedene Eingabe-/Ausgabeeinheiten 152, 154 und 156 sowohl ein Ausfall eines der zweiten Temperatursensoren 112, 114 und 116 als auch ein Ausfall einer der Eingabe-/Ausgabeeinheiten 152, 154, 156 sich in gleicher Weise auswirkt und durch die Erfassung der Temperatur in der zweiten Kältemittelleitung 42 mittels der verbleibenden funktionsfähigen Temperatursensoren 112, 114, 116 ausgeglichen werden kann.

Darüber hinaus sind die redundanten Sensoren, das heißt beispielsweise der redundante erste Temperatursensor 62R, der redundante Saugdrucksensor 82 R, der redundante Enddrucksensor 102R jeweils parallel sowohl mit der Ein-/Ausgabeeinheit 144 des ersten Zentralprozessors 134 als auch mit der Ein-/Ausgabeeinheit 146 des zweiten Zentralprozessors 136 verbunden.

Außerdem sind noch der Schmiermitteltemperatursensor 122 und der Schmiermitteldrucksensor 124 beispielsweise mit der Eingabe-/Ausgabeeinheiten 152, 154 und 156 verbunden, während ebenfalls die hierzu redundanten Sensoren, das heißt der redundante Schmiermitteltemperatursensor 122R und der redundante Schmiermitteldrucksensor 124R parallel mit den Eingabe-/Ausgabeeinheiten 144, 146 verbunden sind.

Um die beiden erfindungsgemäßen Zentralprozessoreinheiten 134 und 136 in möglichst einfacher Weise redundant einsetzen zu können, sind diese vorzugsweise identisch aufgebaut.

Insbesondere umfasst die erste Zentralprozessoreinheit 134 einen ersten Prozessor 162 und einen ersten Speicher 164 und die zweite Zentralprozessoreinheit 136 umfasst einen zweiten Prozessor 172 und einen zweiten Speicher 174.

Die beiden Zentralprozessoreinheiten 134 und 136 arbeiten dabei wie folgt zusammen.

In einem Normalbetriebmodus übernimmt die Zentralprozessoreinheit 134 sämtliche Steuerungsfunktionen für die erfindungsgemäße Kältemittelverdichteranlage 10 und korrespondiert dabei insbesondere mit der dieser unmittelbar zugeordneten Eingabe-/Ausgabeeinheit 144 sowie mit den über das Bussystem 132 verbundenen Eingabe-/Ausgabeeinheiten 152, 154, 156.

Die zweite Zentralprozessoreinheit 136 arbeitet in einem nicht mit den Eingabe-/Ausgabeeinheiten korrespondierenden Wartezustand, wobei der zweiten Zentralprozessoreinheit 136 im Wartezustand ständig oder in aufeinanderfolgenden Intervallen ein Datenstrom 182 übermittelt wird, der sämtliche von dem ersten Prozessor 162 in dem ersten Speicher 164 abgelegten Daten umfasst.

Dieser Datenstrom 182 wird von dem zweiten Prozessor 172 der zweiten Zentralprozessoreinheit 136 im Wartezustand ebenfalls in dem zweiten Speicher 174 abgelegt, so dass der zweite Speicher 174 stets sämtliche Daten zur Verfügung hat, die auch im ersten Speicher 164 gespeichert sind und somit ist der zweite Prozessor 172 jederzeit in der Lage, auf der Basis derselben zum Betrieb der Kältemittelverdichteranlage 10 erforderlichen Daten die Steuerung der Kältemittelverdichteranlage 10 zu übernehmen.

Im Übrigen hat der zweite Prozessor 172 dieselben Adressen wie der erste Prozessor 162, es tritt jedoch keine Adressenkollision auf, da der zweite Prozessor 172 aufgrund seines Wartezustandes nicht mit den Eingabe-/Ausgabeeinheiten 146, 152, 154 und 156 in Kommunikation tritt.

Ferner überwacht die zweite Zentralprozessoreinheit 136 die erste Zentralprozessoreinheit 134 dadurch, dass eine ständige Überprüfung dahingehend erfolgt, ob die erste Zentralprozessoreinheit 134 arbeitet.

Im einfachsten Fall lässt sich dies durch die zweite Zentralprozessoreinheit 136 dadurch überprüfen, dass überprüft wird, in welchen Zeitabständen der Datenstrom 182 von der ersten Zentralprozessoreinheit 134 zur zweiten Zentralprozessoreinheit 136 gesendet wird.

Entfällt der Datenstrom 182 oder wird nach einem festgelegten Zeitintervall kein Datenstrom 182 mehr von der ersten Zentralprozessoreinheit 134 zur zweiten Zentralprozessoreinheit 136 gesandt, so geht die zweite Zentralprozessoreinheit 136 davon aus, dass die erste Zentralprozessoreinheit 134 fehlerhaft arbeitet und übernimmt deren Aufgaben, insbesondere die Steuerung der Kältemittelverdichteranlage 10.

Das Übernehmen der Steuerung der Kältemittelverdichteranlage 10 erfolgt dadurch, dass die zweite Zentralprozessoreinheit 136 der ersten Zentralprozessoreinheit ein Abschaltsignal 184 übermittelt, wobei dieses Abschaltsignal 184 entweder dazu führen kann, dass der erste Prozessor 162 vollständig abgeschaltet wird oder auch dazu führen kann, dass der erste Prozessor 162 in einen unwirksamen Betriebszustand übergeht und dabei nicht mit den Eingabe-/Ausgabeeinheiten 144, 152, 154 und 156 kommuniziert und auch nicht mehr den Datenstrom 182 generiert.

Andererseits wird der zweite Prozessor 172 aktiviert, der nunmehr aufgrund der Tatsache, dass die im ersten Speicher 164 gespeicherten Daten gespiegelt im zweiten Speicher 174 vorliegen, in der Lage ist, auf der Basis derselben Daten wie der erste Prozessor 162 die Steuerungsfunktionen für die Kältemittelverdichteranlage 10 zu übernehmen.

Alternativ zum Überwachen des von der ersten Zentralprozessoreinheit 134 der zweiten Zentralprozessoreinheit 136 übermittelten Datenstroms 182 kann die Funktion der ersten Zentralprozessoreinheit 134 auch dadurch erfasst werden, dass die erste Zentralprozessoreinheit 134 in definierten zeitlichen Abständen Meldesignale 186 erzeugt und diese der zweiten Zentralprozessoreinheit 136 übermittelt. Beim Ausbleiben der Meldesignale übernimmt die zweite Zentralprozessoreinheit 136 die Steuerungsfunktion der Steuereinheit 130 und arbeitet vorzugsweise mit denselben Adressen für die Eingabe-/Ausgabeeinheiten 146, 152, 154 und 156 weiter, da der zweite Prozessor 172 mit dem gleichen Programm arbeitet wie der erste Prozessor 162.

Da der zweite Prozessor 172 mit denselben Adressen versehen ist und genau so arbeitet wie der erste Prozessor 162, ist auch der zweite Prozessor 172 in gleicher Weise in der Lage, sämtliche Kommunikation sowohl mit der Eingabe-/Ausgabeeinheit 146 als auch mit den Eingabe-/Ausgabeeinheiten 152, 154 und 156 zu übernehmen, ohne dass ein Umstellen der über das Bussystem 132 laufenden Kommunikationswege erforderlich ist.

Das von der zweiten Zentralprozessoreinheit 136 der ersten Zentralprozessoreinheit 134 übermittelte Abschaltsignal 184 kann dabei entweder zu einer vollständigen physischen Abschaltung des ersten Prozessors 162 oder zu einer funktionshindernden Blockade desselben führen.

Jede der Zentralprozessoreinheiten 134 bzw. 136 arbeitet primär mit den Sensorwerten der mit den Eingabe-/Ausgabeeinheiten 152, 154 und 156 verbundenen Sensoren 62, 82, 112, 114, 116, 122 und 124.

Tritt jedoch ein Fehler an einem dieser Sensoren auf, so arbeitet die jeweilige Zentralprozessoreinheit 134 bzw. 136 mit den Sensorwerten der redundanten Sensoren 62R, 82R, 102R, 122R und 124R, die an der Ein-/Ausgabeeinheit 144 bzw. 146 der jeweiligen Zentralprozessoreinheit 134 bzw. 136 anliegen und damit für die jeweilige Zentralprozessoreinheit 134 bzw. 136 verfügbar sind.

Damit ist die Funktion der Steuereinheit 130 gegen einen Ausfall von einem der Sensoren und gegen einen Ausfall der ersten Zentralsteuereinheit 134 abgesichert.

Eine weitere Erhöhung der Funktionssicherheit erfolgt dadurch, dass, wie in Fig. 1 dargestellt, die Kältemittelverdichteranlage mindestens zwei, vorzugsweise drei parallelgeschaltete Kältemittelverdichter 22, 24 und 26 mit den entsprechenden Motoren 32, 34, 36 aufweist, wobei unterschiedliche Motorsteuerungen 192, 194, 196, insbesondere Umrichter, der jeweiligen Motoren 32, 34, 36 auf unterschiedliche Eingabe-/Ausgabeeinheiten aufgeschaltet sind. Da während der meisten Betriebszeiten, abgesehen von extremen Betriebszuständen, die Leistung mindestens eines der Kältemittelverdichter 22, 24, 26 entbehrlich ist, kann insbesondere dessen jeweiliger Motor 32, 34, 36 von der Steuereinheit 130 abgeschaltet werden.

Somit ist die erfindungsgemäße Kältemittelverdichteranlage 10, abgesehen von einem extremen Betriebszustand, in dem die Leistung aller drei Kältemittelverdichter 22, 24, 26 erforderlich ist, auch gegen den Ausfall eines der Kältemittelverdichter 22, 24, 26 und/oder eines der jeweiligen Motoren 32, 34, 36 und/oder einer der jeweiligen Motorsteuerungen 192, 194, 196 ebenfalls redundant abgesichert ist, da bei einem Ausfall von einem dieser Kältemittelverdichter 22, 24, 26 oder einem der entsprechenden Motoren 32, 34, 36 oder einer der Motorsteuerungen 192, 194, 196 jeweils der nicht arbeitende Kältemittelverdichter 22, 24, 26 mit dem entsprechenden Motor 32, 34, 36 von der Steuereinheit 130 aktiviert und in Betrieb genommen werden kann, während der defekte Kältemittelverdichter 22, 24, 26 mit dem entsprechenden Motor 32, 34, 36 abgeschaltet wird.

Zur Bedienung der Steuereinheit 130, insbesondere der Zentralprozessoreinheiten 134, 136, ist diesen Zentralprozessoreinheiten 134 und 136 noch eine Bedienungseinheit 200 zugeordnet, die ihrerseits mit einer leitungsgebunden mit der Bedienungseinheit 200 kommunizierenden Visualisierungseinheit 202 versehen ist, und die einen Speicher 204 und einen Prozessor 206 zur Generierung von Bildelementen auf der Visualisierungseinheit 202 aufweist, wobei Komponenten der Kältemittelverdichtungsanlage 10 und Bedienelemente darstellende Bildelemente auf einer Bedienoberfläche der Visualisierungseinheit 202 durch den Prozessor 206 aus in dem Speicher 204 abgelegten Bildelementdaten auf der Visualisierungseinheit 202 generiert werden.

Zusätzlich zu der leitungsgebundenen Visualisierungseinheit 202 ist eine leitungslos mit der Bedienungseinheit 200 kommunizierende Visualisierungseinheit 202' vorgesehen, die beispielsweise über W-Lan, Bluetooth oder ein anderes Kommunikationsnetzwerk mit der Bedienungseinheit 200 kommuniziert und bei einer Ausführungsform ein geeignetes Mobiltelefon oder ein Tablet-Rechner sein kann.

Damit ist eine Visualisierungseinheit 202' tragbar und kann von einer Bedienungsperson jederzeit zur Überwachung und/oder Funktionssteuerung der Kältemittelverdichteranlage 10 eingesetzt werden.

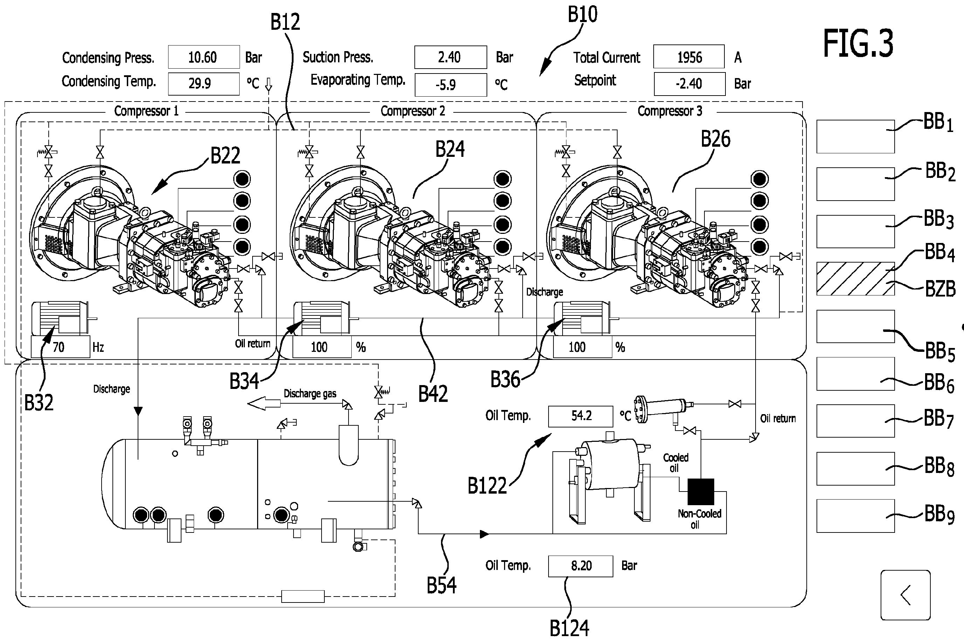

So generiert die Bedienungseinheit 200 beispielsweise als eine erste Bedienoberfläche die in Fig. 3 dargestellte Übersichtsdarstellung, die ein zwei bis drei Kältemittelverdichter 22, 24, 26 aufweisendes Kältemittelverdichtermodul 10 als Bild darstellt, das beispielsweise Verdichterbildelementen B22, B24, B26 sowie Leitungsbildelementen B12, B42, B54 und Aktorbildelementen B32, B34, B36 aufgebaut ist.

Ferner weist die Darstellung gemäß Fig. 3 noch Bedienbildelemente BB auf, die Bedienelemente darstellen, mit welchen einzelne Funktionen der Steuereinheit 130 aktivierbar oder deaktivierbar sind.

Vorzugsweise lässt sich auf der Visualisierungseinheit 202 zusätzlich zum Bedienbildelement BB ein Bedienzustandsbildelement BZB darstellen, das den Bedienzustand, beispielsweise durch einen hell-dunkel-Unterschied oder einen Farbunterschied darstellt.

Ferner umfasst die Übersichtsdarstellung gemäß Fig. 3 noch die Sensordaten anzeigende Sensorbildelemente B122 und B124.

Vorzugsweise sind beide Visualisierungseinheiten 202 und 202' mit berührungsempfindlichen Oberflächen 208, 208' versehen und somit als Touch-Bildschirme bedienbar.

## Patentansprüche

1. Kältemittelverdichteranlage (10) umfassend
eine erste, expandiertes Kältemittel führende Kältemittelleitung (12), eine zweite, verdichtetes Kältemittel führende Kältemittelleitung (42), mindestens einen zwischen der ersten und zweiten Kältemittelleitung angeordneten Kältemittelverdichter (22, 24, 26), der durch einen Motor (32, 34, 36) angetrieben ist,
und eine Steuereinheit (130) zum Betreiben der Kältemittelverdichteranlage (10),
**dadurch gekennzeichnet , dass** dem mit der jeweils aktiven Zentralprozessoreinheit (134, 136) kommunizierenden Bussystem (132) mehrere Eingabe-/Ausgabeeinheiten (152, 154, 156) zugeordnet sind und somit mit der jeweils die Kältemittelverdichteranlage (10) steuernden Zentralprozessoreinheit (134, 136) kommunizieren und dass den für den Betrieb primär vorgesehenen Sensoren (62, 82, 102, 122, 124) redundante Sensoren (62R, 82R, 102R, 122R, 124R) zugeordnet sind und dass die redundanten Sensoren (62R, 82R, 102R, 122R, 124R) mit anderen Eingabe-/Ausgabeeinheiten (144, 146) der Steuereinheit (130) verbunden sind als die für den Betrieb primär vorgesehenen Sensoren (62, 82, 102, 122, 124).

2. Kältemittelverdichteranlage (10) nach Anspruch 1, **dadurch gekennzeichnet, dass** insbesondere der Kältemittelverdichteranlage (10) zugeordnete Sensoren (62, 82, 102, 122, 124) mehreren dem Bussystem (132) zugeordneten Eingabe-/Ausgabeeinheiten (152, 154, 156) zugeordnet sind, dass insbesondere einige der Sensoren (62R, 82R, 102R, 122R, 124R) auf die unmittelbar mit den Zentralprozessoreinheiten (134, 136) kommunizierenden Eingabe-/Ausgabeeinheiten (144, 146) aufgeschaltet sind.

3. Kältemittelverdichteranlage (10) nach einem der voranstehenden Ansprüche, **dadurch gekennzeichnet, dass** einige der Sensoren gleichzeitig mit mehreren Eingabe-/Ausgabeeinheiten (144, 146) verbunden sind.

4. Kältemittelverdichteranlage (10) nach einem der voranstehenden Ansprüche, **dadurch gekennzeichnet, dass** die Steuereinheit (130) eine erste Zentralprozessoreinheit (134) sowie mindestens eine mit der ersten Zentralprozessoreinheit (134) kommunizierende Eingabe-/Ausgabeeinheit (144, 146, 152, 154, 156) für Steuergrößen aufweist, und dass der ersten Zentralprozessoreinheit (134) eine zweite Zentralprozessoreinheit (136) zugeordnet ist, welche bei Ausfall der ersten Zentralprozessoreinheit (134) die Steuerungsfunktionen zur Steuerung der Kältemittelverdichteranlage (10) übernimmt.

5. Kältemittelverdichteranlage (10) nach Anspruch 4, **dadurch gekennzeichnet, dass** die erste Zentralprozessoreinheit (134) mit mindestens einer Eingabe-/Ausgabeeinheit (152, 154, 156) über ein Bussystem (132) kommuniziert.

6. Kältemittelverdichteranlage (10) nach Anspruch 4 oder 5, **dadurch gekennzeichnet, dass** die erste Zentralprozessoreinheit (134) unmittelbar mit mindestens einer Eingabe-/Ausgabeeinheit (144) kommuniziert.

7. Kältemittelverdichteranlage (10) nach einem der Ansprüche 4 bis 6, **dadurch gekennzeichnet, dass** die zweite Zentralprozessoreinheit (136) mit mindestens einer Eingabe-/Ausgabeeinheit (152, 154, 156) über ein Bussystem (132) kommuniziert.

8. Kältemittelverdichteranlage (10) nach einem der Ansprüche 4 bis 7, **dadurch gekennzeichnet, dass** die zweite Zentralprozessoreinheit (136) unmittelbar mit mindestens einer Eingabe-/Ausgabeeinheit (146) kommuniziert.

9. Kältemittelverdichteranlage (10) nach einem der Ansprüche 4 bis 8, **dadurch gekennzeichnet, dass** die zweite Zentralprozessoreinheit (136) mit der ersten Zentralprozessoreinheit (134) über ein Bussystem (132) kommuniziert und dass insbesondere die zweite Zentralprozessoreinheit (136) mit der ersten Zentralprozessoreinheit (134) über dasselbe Bussystem (132) kommuniziert, wie mindestens ein Teil der Eingabe-/Ausgabe-einheiten (152, 154, 156).

10. Kältemittelverdichteranlage (10) nach einem der Ansprüche 4 bis 9, **dadurch gekennzeichnet, dass** die zweite Zentralprozessoreinheit (136) mit den Eingabe-/Ausgabeeinheiten (152, 154, 156) über dasselbe Bussystem (132) kommuniziert wie die erste Zentralprozessoreinheit (134).

11. Kältemittelverdichteranlage (10) nach einem der Ansprüche 4 bis 10, **dadurch gekennzeichnet, dass** die zweite Zentralprozessoreinheit (136) während des Betriebs der Kältemittelverdichteranlage (10) mittels der ersten Zentralprozessoreinheit (134) mit den Eingabe-/Ausgabeeinheiten (142, 144, 152, 154, 156) nicht aktiv kommuniziert und dass insbesondere die erste Zentralprozessoreinheit (134) während des Betriebs der Kältemittelverdichteranlage (10) mittels der zweiten Zentralprozessoreinheit (136) mit den Eingabe-/Ausgabeeinheiten (142, 144, 152, 154, 156) nicht aktiv kommuniziert.

12. Kältemittelverdichteranlage (10) nach einem der Ansprüche 4 bis 11, **dadurch gekennzeichnet, dass** die erste Zentralprozessoreinheit (134) einen ersten Prozessor (162) und einen ersten Speicher (164) aufweist und dass die zweite Zentralprozessoreinheit (136) einen zweiten Prozessor (172) und einen zweiten Speicher (174) aufweist und dass insbesondere in dem zweiten Speicher (174) dieselben Betriebsdaten abgelegt werden, wie in dem dem ersten Prozessor (162) zugeordneten ersten Speicher (164), dass insbesondere die erste Zentralprozessoreinheit (134) die in dem ersten Speicher (164) abzulegenden Betriebsdaten ständig und zeitnah mit dem Ablegen im ersten Speicher (164) in Form eines Datenstroms (182) der zweiten Zentralprozessoreinheit (136) übermittelt, dass insbesondere die erste Zentralprozessoreinheit (134) den Datenstrom (182) innerhalb eines vorgegebenen Toleranzzeitintervalls übermittelt.

13. Kältemittelverdichteranlage (10) nach einem der Ansprüche 4 bis 12, **dadurch gekennzeichnet, dass** die zweite Zentralprozessoreinheit (136) die Funktionsfähigkeit der ersten Zentralprozessoreinheit (134) ständig überwacht und insbesondere bei nicht mehr bestehender Funktionsfähigkeit die Steuerung der Kältemittelverdichteranlage selbsttätig übernimmt, dass insbesondere die zweite Zentralprozessoreinheit (136) durch Überwachung eines von der ersten Zentralprozessoreinheit (134) übertragenen Datenstroms (182) die Betriebsfähigkeit der ersten Zentralprozessoreinheit (134) überwacht und dass insbesondere die zweite Zentralprozessoreinheit (136) die Zeitintervalle zwischen von der ersten Zentralprozessoreinheit (134) der zweiten Zentralprozessoreinheit (136) übertragenen Datenpaketen überwacht.

14. Kältemittelverdichteranlage (10) nach einem der Ansprüche 4 bis 13, **dadurch gekennzeichnet, dass** die zweite Zentralprozessoreinheit (136) bei Ausbleiben eines auf ein Datenpaket nachfolgenden Datenpakets für mehr als eine Sekunde von der nicht mehr bestehenden Funktionsfähigkeit der ersten Zentralprozessoreinheit (134) ausgeht und die Steuerung der Kältemittelverdichteranlage (10) selbsttätig übernimmt, dass insbesondere die zweite Zentralprozessoreinheit (136) bei Übernahme der Steuerungsfunktionen der ersten Zentralprozessoreinheit (134) die erste Zentralprozessoreinheit (134) deaktiviert.

15. Kältemittelverdichteranlage (10) nach einem der Ansprüche 4 bis 14, **dadurch gekennzeichnet, dass** die zweite Zentralprozessoreinheit (136) nach der Übernahme der Steuerungsfunktion von der ersten Kältemittelverdichteranlage (10) die erste Zentralprozessoreinheit (134) solange deaktiviert hält, bis ein Zurücksetzen der Steuereinheit (130) der Kältemittelverdichteranlage (10) durch einen Servicezugriff auf die erste Zentralprozessoreinheit (134) und die zweite Zentralprozessoreinheit (136) erfolgt.

16. Kältemittelverdichteranlage (10) nach einem der voranstehenden Ansprüche, **dadurch gekennzeichnet, dass** die Eingabe-/Ausgabeeinheiten (144, 146, 152, 154, 156) mit Aktor- oder Anzeigeeinheiten verbunden sind.

17. Kältemittelverdichteranlage (10) nach einem der voranstehenden Ansprüche, **dadurch gekennzeichnet, dass** zwischen der ersten Kältemittelleitung (12) und der zweiten Kältemittelleitung (42) mindestens zwei parallel angeordnete Kältemittelverdichter (22, 24, 26) vorgesehen sind, dass insbesondere die Steuereinheit (130) die Kältemittelverdichter (22, 24, 26) überwacht und bei Ausfall eines der Kältemittelverdichter (22, 24, 26) einen momentan nicht aktiven der Kältemittelverdichter (22, 24, 26) aktiviert.

## Claims

1. A refrigerant compressor system (10), including
a first refrigerant line (12) that conducts expanded refrigerant,
a second refrigerant line (42) that conducts compressed refrigerant,
at least one refrigerant compressor (22, 24, 26) that is arranged between the first and the second refrigerant line and is driven by a motor (32, 34, 36),
and a control unit (130) for operating the refrigerant compressor system (10),
**characterised in that** a plurality of input/output units (152, 154, 156) are associated with the bus system (132) that communicates with the respectively active central processing unit (134, 136) and hence communicate with the central processing unit (134, 136) that respectively controls the refrigerant compressor system (10), and **in that** redundant sensors (62R, 82R, 102R, 122R, 124R) are associated with the sensors (62, 82, 102, 122, 124) that are primarily provided for operation, and **in that** the redundant sensors (62R, 82R, 102R, 122R, 124R) are connected to different input/output units (144, 146) of the control unit (130) from those sensors (62, 82, 102, 122, 124) primarily provided for operation.

2. A refrigerant compressor system (10) according to claim 1, **characterised in that** in particular sensors (62, 82, 102, 122, 124) associated with the refrigerant compressor system (10) are associated with a plurality of input/output units (152, 154, 156) that are associated with the bus system (132), **in that** in particular some of the sensors (62R, 82R, 102R, 122R, 124R) are connected up to the input/output units (144, 146) that communicate directly with the central processing units (134, 136).

3. A refrigerant compressor system (10) according to one of the preceding claims, **characterised in that** some of the sensors are connected to a plurality of input/output units (144, 146) at the same time.

4. A refrigerant compressor system (10) according to one of the preceding claims, **characterised in that** the control unit (130) has a first central processing unit (134) and at least one input/output unit (144, 146, 152, 154, 156) for control variables that communicates with the first central processing unit (134), and **in that** there is associated with the first central processing unit (134) a second central processing unit (136) which, in the event of a failure of the first central processing unit (134), takes over the control functions for the purpose of controlling the refrigerant compressor system (10).

5. A refrigerant compressor system (10) according to claim 4, **characterised in that** the first central processing unit (134) communicates with at least one input/output unit (152, 154, 156) by way of a bus system (132).

6. A refrigerant compressor system (10) according to claim 4 or 5, **characterised in that** the first central processing unit (134) communicates directly with at least one input/output unit (144).

7. A refrigerant compressor system (10) according to one of claims 4 to 6, **characterised in that** the second central processing unit (136) communicates with at least one input/output unit (152, 154, 156) by way of a bus system (132).

8. A refrigerant compressor system (10) according to one of claims 4 to 7, **characterised in that** the second central processing unit (136) communicates directly with at least one input/output unit (146).

9. A refrigerant compressor system (10) according to one of claims 4 to 8, **characterised in that** the second central processing unit (136) communicates with the first central processing unit (134) by way of a bus system (132) and that in particular the second central processing unit (136) communicates with the first central processing unit (134) by way of the same bus system (132) as at least some of the input/output units (152, 154, 156).

10. A refrigerant compressor system (10) according to one of claims 4 to 9, **characterised in that** the second central processing unit (136) communicates with the input/output units (152, 154, 156) by way of the same bus system (132) as the first central processing unit (134).

11. A refrigerant compressor system (10) according to one of claims 4 to 10, **characterised in that** the second central processing unit (136) does not communicate actively with the input/output units (142, 144, 152, 154, 156) during operation of the refrigerant compressor system (10) by the first central processing unit (134), and **in that** in particular the first central processing unit (134) does not communicate actively with the input/output units (142, 144, 152, 154, 156) during operation of the refrigerant compressor system (10) by the second central processing unit (136).

12. A refrigerant compressor system (10) according to one of claims 4 to 11, **characterised in that** the first central processing unit (134) has a first processor (162) and a first memory (164), and **in that** the second central processing unit (136) has a second processor (172) and a second memory (174), and **in that** in particular the same operating data are stored in the second memory (174) as in the first memory (164), which is associated with the first processor (162), **in that** in particular the first central processing unit (134) transmits the operating data to be stored in the first memory (164), constantly and promptly with storage in the first memory (164), to the second central processing unit (136) in the form of a data stream (182), **in that** in particular the first central processing unit (134) transmits the data stream (182) within a predetermined tolerance time interval.

13. A refrigerant compressor system (10) according to one of claims 4 to 12, **characterised in that** the second central processing unit (136) constantly monitors proper functioning of the first central processing unit (134), and in particular takes over control of the refrigerant compressor system automatically in the event that proper functioning no longer prevails, **in that** in particular the second central processing unit (136) monitors whether the first central processing unit (134) is operational by monitoring a data stream (182) transmitted from the first central processing unit (134), and **in that** in particular the second central processing unit (136) monitors the time intervals between data packets transmitted from the first central processing unit (134) to the second central processing unit (136).

14. A refrigerant compressor system (10) according to one of claims 4 to 13, **characterised in that**, in the event of a data packet not being succeeded by a data packet for more than a second, the second central processing unit (136) acts on the basis that the first central processing unit (134) is no longer functioning properly, and takes over control of the refrigerant compressor system (10) automatically, **in that** in particular **characterised in that** the second central processing unit (136) deactivates the first central processing unit (134) when the control functions of the first central processing unit (134) are taken over.

15. A refrigerant compressor system (10) according to one of claims 4 to 14, **characterised in that**, after the second central processing unit (136) has taken over the control function from the first refrigerant compressor system (10), it keeps the first central processing unit (134) deactivated until the control unit (130) of the refrigerant compressor system (10) is reset by a servicing intervention acting on the first central processing unit (134) and the second central processing unit (136).

16. A refrigerant compressor system (10) according to one of the preceding claims, **characterised in that** the input/output units (144, 146, 152, 154, 156) are connected to actuator or display units.

17. A refrigerant compressor system (10) according to one of the preceding claims, **characterised in that** at least two parallel refrigerant compressors (22, 24, 26) are provided between the first refrigerant line (12) and the second refrigerant line (42), **in that** in particular the control unit (130) monitors the refrigerant compressors (22, 24, 26) and, in the event of failure of one of the refrigerant compressors (22, 24, 26), activates one of the refrigerant compressors (22, 24, 26) that is not currently active.

## Revendications

1. Installation de compression de réfrigérant (10) comprenant
un premier conduit de réfrigérant (12) guidant du réfrigérant expansé,
un deuxième conduit de réfrigérant (42) guidant du réfrigérant compressé,
au moins un compresseur de réfrigérant (22, 24, 26) disposé entre le premier et le deuxième conduit de réfrigérant, qui est entraîné par un moteur (32, 34, 36), et une unité de commande (130) pour faire fonctionner l'installation de compression de réfrigérant (10), **caractérisée en ce que** plusieurs unités d'entrée/de sortie (152, 154, 156) sont associées au système de bus (132) communiquant avec l'unité de processeur centrale (134, 136) respectivement active et ainsi communiquent avec l'unité de processeur centrale (134, 136) commandant respectivement l'installation de compression de réfrigérant (10), et que des capteurs (62R, 82R, 102R, 122R, 124R) redondants sont associés aux capteurs (62, 82, 102, 122, 124) prévus de manière primaire pour le fonctionnement, et que les capteurs (62R, 82R, 102R, 122R, 124R) redondants sont reliés à d'autres unités d'entrée/de sortie (144, 146) de l'unité de commande (130) que les capteurs (62, 82, 102, 122, 124) prévus de manière primaire pour le fonctionnement.

2. Installation de compression de réfrigérant (10) selon la revendication 1, **caractérisée en ce que** des capteurs (62, 82, 102, 122, 124) associés en particulier à l'installation de compression de réfrigérant (10) sont associés à plusieurs unités d'entrée/de sortie (152, 154, 156) associées au système de bus (132), qu'en particulier certains des capteurs (62R, 82R, 102R, 122R, 124R) sont enclenchés sur les unités d'entrée/de sortie (144, 146) communiquant directement avec les unités de processeur centrales (134, 136).

3. Installation de compression de réfrigérant (10) selon l'une quelconque des revendications précédentes, **caractérisée en ce que** certains des capteurs sont reliés simultanément à plusieurs unités d'entrée/de sortie (144, 146) .

4. Installation de compression de réfrigérant (10) selon l'une quelconque des revendications précédentes, **caractérisée en ce que** l'unité de commande (130) présente une première unité de processeur centrale (134) ainsi qu'au moins une unité d'entrée/de sortie (144, 146, 152, 154, 156) communiquant avec la première unité de processeur centrale (134) pour des grandeurs de commande, et qu'à la première unité de processeur centrale (134) est associée une deuxième unité de processeur centrale (136), laquelle reprend en cas de panne de la première unité de processeur centrale (134) les fonctions de commande pour commander l'installation de compression de réfrigérant (10).

5. Installation de compression de réfrigérant (10) selon la revendication 4, **caractérisée en ce que** la première unité de processeur centrale (134) communique avec au moins une unité d'entrée/de sortie (152, 154, 156) par l'intermédiaire d'un système de bus (132).

6. Installation de compression de réfrigérant (10) selon la revendication 4 ou 5, **caractérisée en ce que** la première unité de processeur centrale (134) communique directement avec au moins une unité d'entrée/de sortie (144) .

7. Installation de compression de réfrigérant (10) selon l'une quelconque des revendications 4 à 6, **caractérisée en ce que** la deuxième unité de processeur centrale (136) communique avec au moins une unité d'entrée/de sortie (152, 154, 156) par l'intermédiaire d'un système de bus (132) .

8. Installation de compression de réfrigérant (10) selon l'une quelconque des revendications 4 à 7, **caractérisée en ce que** la deuxième unité de processeur centrale (136) communique directement avec au moins une unité d'entrée/de sortie (146).

9. Installation de compression de réfrigérant (10) selon l'une quelconque des revendications 4 à 8, **caractérisée en ce que** la deuxième unité de processeur centrale (136) communique avec la première unité de processeur centrale (134) par l'intermédiaire d'un système de bus (132), et qu'en particulier la deuxième unité de processeur centrale (136) communique avec la première unité de processeur centrale (134) par l'intermédiaire du même système de bus (132) qu'au moins une partie des unités d'entrée/de sortie (152, 154, 156).

10. Installation de compression de réfrigérant (10) selon l'une quelconque des revendications 4 à 9, **caractérisée en ce que** la deuxième unité de processeur centrale (136) communique avec les unités d'entrée/de sortie (152, 154, 156) par l'intermédiaire du même système de bus (132) que la première unité de processeur centrale (134).

11. Installation de compression de réfrigérant (10) selon l'une quelconque des revendications 4 à 10, **caractérisée en ce que** la deuxième unité de processeur centrale (136) ne communique pas activement avec les unités d'entrée/de sortie (142, 144, 152, 154, 156) au moyen de la première unité de processeur centrale (134) pendant le fonctionnement de l'installation de compression de réfrigérant (10), et qu'en particulier la première unité de processeur centrale (134) ne communique pas activement avec les unités d'entrée/de sortie (142, 144, 152, 154, 156) au moyen de la deuxième unité de processeur centrale (136) pendant le fonctionnement de l'installation de compression de réfrigérant (10).

12. Installation de compression de réfrigérant (10) selon l'une quelconque des revendications 4 à 11, **caractérisée en ce que** la première unité de processeur centrale (134) présente un premier processeur (162) et une première mémoire (164), et que la deuxième unité de processeur centrale (136) présente un deuxième processeur (172) et une deuxième mémoire (174), et que sont enregistrées en particulier dans la deuxième mémoire (174) les mêmes données de fonctionnement que dans la première mémoire (164) associée au premier processeur (162), qu'en particulier la première unité de processeur centrale (134) transmet les données de fonctionnement à enregistrer dans la première mémoire (164) en permanence et en temps réel avec l'enregistrement dans la première mémoire (164) sous la forme d'un flux de données (182) de la deuxième unité de processeur centrale (136), qu'en particulier la première unité de processeur centrale (134) transmet le flux de données (182) à l'intérieur d'un intervalle de temps de tolérance spécifié.

13. Installation de compression de réfrigérant (10) selon l'une quelconque des revendications 4 à 12, **caractérisée en ce que** la deuxième unité de processeur centrale (136) surveille en permanence le bon fonctionnement de la première unité de processeur centrale (134) et en particulier reprend de manière autonome la commande de l'installation de compression de réfrigérant dans le cas d'un bon fonctionnement inexistant, et qu'en particulier la deuxième unité de processeur centrale (136) surveille le bon fonctionnement de la première unité de processeur centrale (134) en surveillant un flux de données (182) transmis par la première unité de processeur centrale (134), et qu'en particulier la deuxième unité de processeur centrale (136) surveille les intervalles de temps entre des paquets de données transmis par la première unité de processeur centrale (134) à la deuxième unité de processeur de processeur centrale (136).

14. Installation de compression de réfrigérant (10) selon l'une quelconque des revendications 4 à 13, **caractérisée en ce que** la deuxième unité de processeur centrale (136) part de l'inexistence d'un bon fonctionnement de la première unité de processeur centrale (134) en l'absence d'un paquet de données suivant un paquet de données pendant plus d'une seconde et reprend de manière autonome la commande de l'installation de compression de réfrigérant (10), qu'en particulier la deuxième unité de processeur centrale (136) désactive la première unité de processeur centrale (134) lors de la reprise des fonctions de commande de la première unité de processeur centrale (134).

15. Installation de compression de réfrigérant (10) selon l'une quelconque des revendications 4 à 14, **caractérisée en ce que** la deuxième unité de processeur centrale (136) maintient, après la reprise de la fonction de commande de la première installation de compression de réfrigérant (10), la première unité de processeur centrale (134) désactivée jusqu'à ce qu'une réinitialisation de l'unité de commande (130) de l'installation de compression de réfrigérant (10) soit effectuée par un accès de maintenance à la première unité de processeur centrale (134) et à la deuxième unité de processeur centrale (136).

16. Installation de compression de réfrigérant (10) selon l'une quelconque des revendications précédentes, **caractérisée en ce que** les unités d'entrée/de sortie (144, 146, 152, 154, 156) sont reliées aux unités d'actionneur ou d'affichage.

17. Installation de compression de réfrigérant (10) selon l'une quelconque des revendications précédentes, **caractérisée en ce qu'**au moins deux compresseurs de réfrigérant (22, 24, 26) disposés de manière parallèle sont prévus entre le premier conduit de réfrigérant (12) et le deuxième conduit de réfrigérant (42), qu'en particulier l'unité de commande (130) surveille les compresseurs de réfrigérant (22, 24, 26) et active, en cas de panne d'un des compresseurs de réfrigérant (22, 24, 26), un compresseur de réfrigérant non actif sur le moment des compresseurs de réfrigérant (22, 24, 26).
